# FASCICULE DE BREVET EUROPEEN

(11) **EP 2 887 113 B1**
(45) Date de publication et mention de la délivrance du brevet: **09.11.2016**
(21) Numéro de dépôt: 14197866.8
(22) Date de dépôt: 15.12.2014
(51) Int. Cl.: G02B 7/183, G02B 7/192, G02B 5/08

(54) **Structure alvéolaire**
Wabenstruktur
Cellular structure

(30) Priorité: 18.12.2013 FR 1302976
(43) Date de publication de la demande: 24.06.2015
(73) Titulaire: Thales, 92400 Courbevoie (FR)
(72) Inventeur: Devilliers, Christophe, 06130 GRASSE (FR); Suau, Aurélien, 06156 CANNES (FR); Cornillon, Laurence, 06130 GRASSE (FR)
(74) Mandataire: Priori, Enrico

(56) Documents cités:
- DE-A1-102009 011 863
- US-A- 5 227 921
- US-A- 6 045 231

## Description

La présente invention concerne le domaine des structures alvéolaires et notamment les structures alvéolaires pour télescopes à haute et très haute résolution. La présente invention concerne également un miroir pour par exemple un tel télescope.

L'invention peut par exemple trouver une utilisation dans la construction de miroirs pour télescope à haute et très haute résolution.

Les télescopes spatiaux portés par des satellites nécessitent des grands miroirs hyper stables et hyper allégés. Pour cela on utilise couramment des miroirs dont la structure est en carbure de silicium (Sic) ou en vitrocéramique de type Zerodur®.

Le poids étant un handicap dans le domaine spatial, les miroirs sont localement raidis par une peau arrière rapportée afin de réduire leur masse. L'inconvénient de rapporter une telle peau arrière, même dans le même matériau que les raidisseurs, est l'instabilité nanométrique engendrée par la colle assurant la jonction entre la peau arrière et le miroir. Il est connu de coller la peau arrière sur le sommet des raidisseurs mais lors du séchage et de la polymérisation, la colle génère par son rétreint, une déformation importante et notamment des contraintes internes à la colle. Lors de son vieillissement la colle relâche progressivement une partie des contraintes et déforment le miroir.

De même, lorsque la structure alvéolaire du miroir est soumise à des cyclages thermiques la colle se relaxe notamment au niveau des ménisques entrainant une libération progressive des contraintes et donc une très forte déformation du miroir poli.

Il est connu dans l'art antérieur, notamment par la demande de brevet allemand DE 10 2009 011 863 A1, une structure alvéolaire en deux parties.

Le brevet américain US 5 227 921 enseigne un ensemble optique léger en deux parties.

Un but de l'invention est notamment de corriger les inconvénients précités en proposant un dispositif permettant de réduire les contraintes de la colle.

A cet effet, l'invention a pour objet une structure alvéolaire comprenant une partie dite avant et une partie dite arrière caractérisé en ce que :
- la partie dite avant et la partie dite arrière sont des structures alvéolaires formées d'une peau et de raidisseurs en une seule pièce, lesdits raidisseurs étant formés de lames entrecroisées orientées de façon sensiblement perpendiculaire à ladite peau,
- la partie dite avant et la partie dite arrière comprennent des excroissances au niveau des raidisseurs sur la face opposée à la peau, lesdites excroissances étant disposées sur lesdites partie dite avant et partie dite arrière de façon à ce que chaque excroissance de la partie dite avant se retrouve en vis-à-vis avec une excroissance de la partie dite arrière lorsque les deux parties sont superposées,
- la partie dite avant et la partie dite arrière sont assemblées par l'intermédiaire de dispositif de fixation dans lesquels sont insérés deux excroissances en vis-à-vis.

Suivant une variante de réalisation, au moins une excroissance de la structure alvéolaire est disposée au niveau de l'intersection d'au moins deux raidisseurs.

Suivant une variante de réalisation, au moins une excroissance de la structure alvéolaire est collée au dispositif de fixation.

Suivant une variante de réalisation, le joint de colle est réparti seulement sur une partie de la périphérie des excroissances.

Suivant une variante de réalisation, les excroissances sont des tétons cylindriques.

Suivant une variante de réalisation, au moins un dispositif de fixation est fendu au moins au niveau d'une de ses extrémités.

Suivant une variante de réalisation, le dispositif de fixation est une douille.

Suivant une variante de réalisation, le dispositif de fixation est en invar®.

Suivant une variante de réalisation, le dispositif de fixation est réalisé avec une matière céramique choisie parmi le nitrure de silicium et le verre vitrocéramique de type zérodur®.

l'invention a également pour objet un miroir comprenant une structure alvéolaire (1) selon une des revendications précédentes caractérisé en ce que la partie réfléchissante est formée par ou sur la peau de ladite stucture alvéolaire (1).

D'autres particularités et avantages de la présente invention apparaîtront plus clairement à la lecture de la description ci-après, donnée à titre illustratif et non limitatif, et faite en référence aux dessins annexés, dans lesquels :
- La figure 1 représente un exemple de réalisation d'une structure alvéolaire selon l'invention
- La figure 2 représente un exemple de mode de réalisation de l'assemblage des deux parties d'une structure alvéolaire selon l'invention.
- La figure 3 représente un exemple de mode de réalisation d'un dispositif de fixation selon l'invention.

La présente invention concerne une structure alvéolaire 1 formée de deux parties 21, 22, une partie 21 dite "avant" et une partie 22 dite "arrière". Chacune des parties 21, 22 dites avant et arrière sont formées de structures alvéolaires. Suivant un mode de réalisation, chacune des parties 21, 22 de la structure alvéolaire 1 est en carbure de silicium (SiC). Suivant un autre mode de réalisation, les parties 21, 22 de la structure alvéolaire 1 sont en verre vitrocéramique de type Zerodur®.

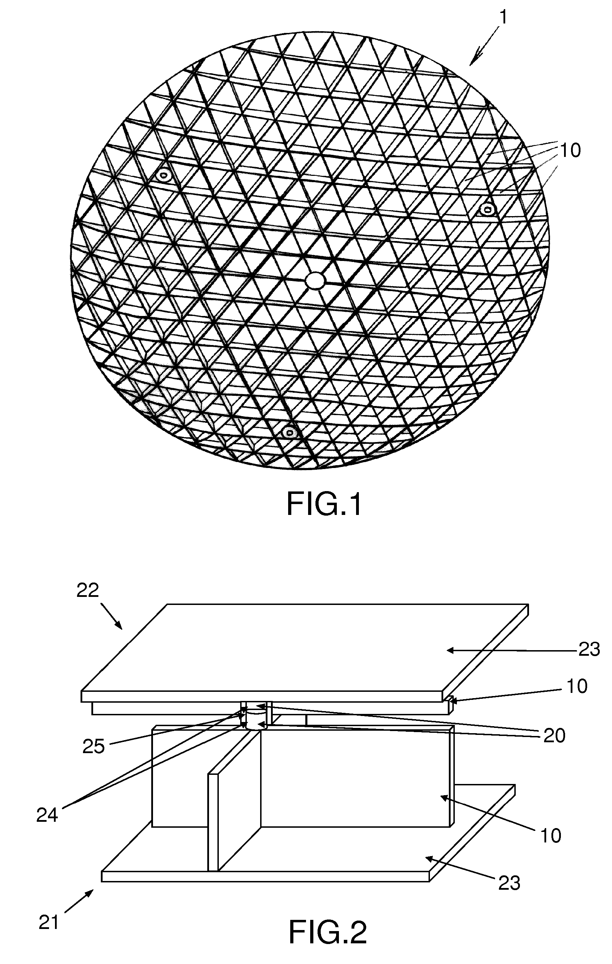

En référence à la figure 1, chacune des deux parties 21, 22 de la structure alvéolaire 1 comprend une peau 23 et des raidisseurs 10 le tout formant une structure monobloc, c'est à dire une structure réalisée en une seule pièce. Les raidisseurs 10 et la peau 23 peuvent, par exemple, être obtenus par usinage dans la masse, par moulage ou tout autre moyen équivalent.

Suivant un mode de réalisation, les raidisseurs 10 peuvent être formés de lames entrecroisées orientées selon une direction sensiblement perpendiculaire à la surface de la peau 23. De façon avantageuse, ces raidisseurs 10 permettent de rigidifier les parties avant et arrière de la structure alvéolaire face aux sollicitations mécaniques tout en allégeant chaque partie de ladite structure alvéolaire 1.

En référence à la figure 2, chacune des deux parties avant 21 et arrière 22 comprennent des excroissances 20 sur la face opposée à la peau 23. Suivant un mode de réalisation ces excroissances 20 s'étendent suivant une direction sensiblement perpendiculaire à la surface de la peau 23.

Suivant un mode de réalisation particulier, ces excroissances 20 peuvent avoir la forme d'un téton cylindrique.

Les excroissances 20 peuvent par exemple être réalisées lors de l'usinage des raidisseurs 10.

Suivant un exemple de réalisation illustré à la figure 2, les excroissances 20 sont disposées au niveau de certaines intersections des lames formant les raidisseurs sur la face opposées à la surface formant la peau 23. Ces excroissances 20 peuvent, par exemple, être réalisées lors de l'usinage des raidisseurs 10.

Suivant un mode de réalisation particulier, les excroissances 20 peuvent être formées au niveau de chaque intersection de raidisseurs 10.

La partie dite " avant " 21 et la partie dite " arrière " 22 sont destinées à être assemblées ensemble par l'intermédiaire des excroissances 20 formées dans chacune des parties avant 21 et arrière 22. Pour ce faire, les excroissances 20 sont disposées sur chaque partie avant et arrière de façon à ce que chaque excroissance 20 de la partie dite " avant " 21 se retrouve en regard d'une excroissance 20 de la partie dite " arrière " 22 lorsque les deux parties sont superposées.

Suivant un mode de réalisation, au moins deux excroissances 20 en regard, destinées à être assemblées ensemble peuvent ne pas être symétriques par rapport au point de jonction des deux excroissances 20. Les deux excroissances 20 peuvent par exemple être de longueur différente et/ou de diamètre différent.

L'assemblage des deux parties avant et arrière est assuré par des dispositifs de fixation 25 dans lesquels sont insérés deux à deux, les excroissances 20 en vis-à-vis. Le dispositif de fixation 25 peut être par exemple en invar®, en nitrure de silicium (Si3N4) ou en vitrocéramique de type Zerodur® ou tout autre matériau équivalent. Les excroissances 20 peuvent être collées au dispositif de fixation 25. Suivant un mode de réalisation, le joint de colle 24 réparti seulement sur la périphérie des excroissances 20.

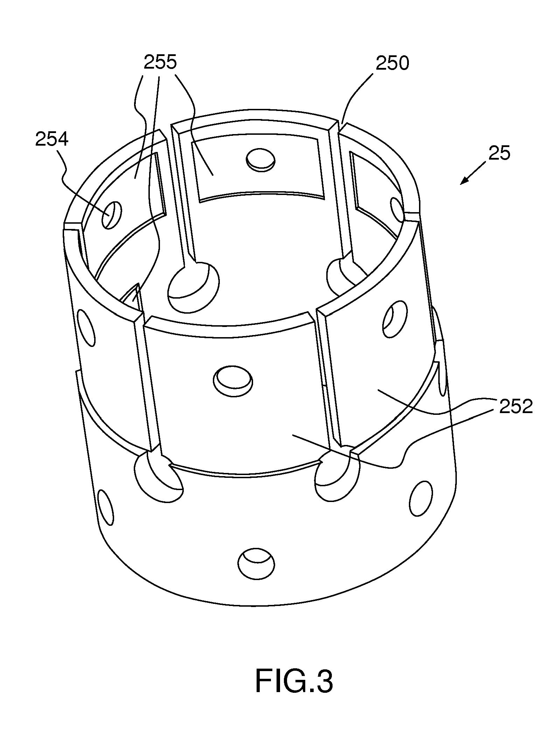

A titre illustratif, la figure 3 représente un exemple de mode de réalisation dans lequel le dispositif de fixation 25 est une douille.

Afin de faciliter l'insertion des excroissances, au moins une extrémité d'au moins un dispositif de fixation 25 peut être fendue. Les fentes 250 délimitent des lames souples 252. De façon avantageuse, ces fentes 250 permettent également de donner plus de souplesse à l'extrémité du dispositif de fixation 25 et permettent d'ajuster les dispositifs de fixation 25 aux excroissances 20.

Afin de donner plus de souplesse à l'extrémité fendue du dispositif de fixation 25, la partie fendue dudit dispositif 25 peut être décolletée.

Suivant un mode de réalisation au moins un dispositif de fixation 25 peut comporter différents chambrages 255 ou renfoncement. Ces chambrages peuvent avoir la forme d'un évidement borgne. Suivant un mode de réalisation, ces chambrages 255 peuvent être disposés au centre des lames souples 252 dans la partie en vis-à-vis des excroissances 20. Ces chambrages 255 sont destinés à recevoir la colle servant à fixer les excroissances 20. Ainsi la colle ne se retrouve pas sur toute la périphérie de l'excroissance mais reste localisée au niveau des chambrages 255. De façon avantageuse, le fait de ne pas encoller toute la périphérie du dispositif de fixation 25 permet de minimiser la quantité de colle utilisée. Cela permet également, au dispositif de fixation 25, de conserver de la souplesse pour pallier d'éventuels défauts de forme du dispositif de fixation 25 et/ou des excroissances 20. De plus, lorsque la colle se charge d'humidité, elle gonfle et tend à repousser les lames souples 252 du dispositif de fixation 25 et/ou les excroissances 20. La souplesse du dispositif de fixation 25 permet à ce dernier de se déformer et évite ainsi les déformations des excroissances 20. Lorsque le dispositif de fixation 25 ne possède pas de lames souples 252 si la colle se dilate, elle est emprisonnée dans un dispositif de fixation 25 très raide, et va donc déformer les excroissances 20.

Suivant un mode de réalisation, un trou débouchant 254 est réalisé dans au moins un chambrage 255. De façon avantageuse, ce trou 254 permet d'injecter la colle après montage du dispositif de fixation 25.

De façon avantageuse, les excroissances 20, de par leur volume, permettent de ne transmettre ni aux raidisseurs 10 de la structure alvéolaire ni à la peau 23 de la structure alvéolaire 1 les déformés de la colle. Les contraintes restent concentrées au niveau des excroissances, la colle peut donc avoir un vieillissement sans créer de déformations de la structure alvéolaire 1.

Dans le cas d'excroissances 20 cylindriques, le collage local circulaire offre une symétrie des contraintes ce qui permet leur annulation. Dans ce mode de réalisation, les contraintes de la colle sont symétriques et radiales au niveau de chaque excroissance 20.

L'invention précédemment décrite peut par exemple trouver une utilisation dans la construction de miroirs pour télescope à haute et très haute résolution. A cet effet, la présente invention concerne également un miroir réalisé avec un mode de réalisation de la structure alvéolaire précédemment décrite. Dans ce miroir, la surface réfléchissante peut être réalisée par la peau 23 de la structure 1 ou sur la peau 23 de ladite structure alvéolaire.

## Revendications

1. Structure alvéolaire (1) comprenant une partie dite avant (21) et une partie dite arrière (22) telles que :
- la partie dite avant (21) et la partie dite arrière (22) sont des structures alvéolaires formées d'une peau (23) et de raidisseurs (10) le tout formant une structure monobloc, lesdits raidisseurs (10) étant formés de lames entrecroisées orientées de façon sensiblement perpendiculaire à ladite peau (23),
la structure étant **caractérisée en ce que** :
- la partie dite avant (21) et la partie dite arrière (22) comprennent des excroissances (20) au niveau des raidisseurs (10) sur la face opposée à la peau (23), lesdites excroissances (10) étant disposées sur lesdites partie dite avant (21) et partie dite arrière (22) de façon à ce que chaque excroissance (20) de la partie dite avant (21) se retrouve en vis-à-vis avec une excroissance (20) de la partie dite arrière (22) lorsque les deux parties sont assemblées, et **en ce que**
- la partie dite avant (21) et la partie dite arrière (22) sont assemblées par l'intermédiaire de dispositif de fixation (25) dans lesquels sont insérés deux excroissances (20) en vis-à-vis.

2. Structure alvéolaire (1) selon la revendication précédente, selon laquelle au moins une excroissance (20) est disposée au niveau de l'intersection d'au moins deux raidisseurs (10).

3. Structure alvéolaire (1) selon une des revendications précédentes, selon laquelle au moins une excroissance (20) est collée au dispositif de fixation (25).

4. Structure alvéolaire (1) selon la revendication précédente, selon laquelle le joint de colle (24) est réparti seulement sur une partie de la périphérie des excroissances (20).

5. Structure alvéolaire (1) selon une des revendications précédentes, selon laquelle les excroissances (20) sont des tétons cylindriques.

6. Structure alvéolaire (1) selon une des revendications précédentes, selon laquelle au moins un dispositif de fixation (25) est fendu au moins au niveau d'une de ses extrémités.

7. Structure alvéolaire (1) selon une des revendications précédentes, selon laquelle le dispositif de fixation (25) est une douille.

8. Structure alvéolaire (1) selon une des revendications précédentes, selon laquelle le dispositif de fixation (25) est en invar®.

9. Structure alvéolaire (1) selon une des revendications 1 à 7, selon laquelle le dispositif de fixation (25) est réalisé avec une matière céramique choisie parmi le nitrure de silicium et le verre vitrocéramique de type zérodur®.

10. Miroir comprenant une structure alvéolaire (1) selon une des revendications précédentes **caractérisé en ce que** la partie réfléchissante est formée par ou sur la peau de ladite stucture alvéolaire (1).

## Patentansprüche

1. Wabenstruktur (1), die einen als vorderer Teil (21) und einen als hinterer Teil (22) bezeichneten Teil umfasst, die folgendermaßen beschaffen sind:
der als vorderer Teil (21) bezeichnete Teil und der als hinterer Teil (22) bezeichnete Teil sind Wabenstrukturen, die aus einer Membran (23) und Stützelementen (10) gebildet sind, wobei das Ganze eine einheitliche Struktur bildet, wobei die Stützelemente (10) aus gekreuzten Lamellen bestehen, die im Wesentlichen senkrecht zur Membran (23) ausgerichtet sind,
wobei die Struktur **dadurch gekennzeichnet ist, dass**:
der als vorderer Teil (21) bezeichnete Teil und der als hinterer Teil (22) bezeichnete Teil Vorsprünge (20) an den Stützelementen (10) auf der der Membran (23) gegenüberliegenden Fläche umfasst, wobei die Vorsprünge (10) so auf den als vorderer Teil (21) und hinterer Teil (22) bezeichneten Teilen angeordnet sind, dass jeder Vorsprung (20) des als vorderer Teil (21) bezeichneten Teils einem Vorsprung (20) des als hinterer Teil (22) bezeichneten Teils gegenübersteht, wenn beide Teile zusammengebaut werden, und dadurch, dass
der als vorderer Teil (21) bezeichnete Teil und der als hinterer Teil (22) bezeichnete Teil anhand von Befestigungselementen (25) zusammengebaut werden, in die jeweils zwei gegenüberliegende Vorsprünge (20) eingesteckt werden.

2. Wabenstruktur (1) nach dem vorhergehenden Anspruch, wobei mindestens ein Vorsprung (20) am Schnittpunkt mindestens zweier Stützelemente (10) angeordnet ist.

3. Wabenstruktur (1) nach einem der vorhergehenden Ansprüche, wobei mindestens ein Vorsprung (20) an das Befestigungselement (25) geklebt ist.

4. Wabenstruktur (1) nach dem vorhergehenden Anspruch, wobei die Klebefuge (24) lediglich auf einem Teil des Umfangs der Vorsprünge (20) verteilt ist.

5. Wabenstruktur (1) nach einem der vorhergehenden Ansprüche, wobei es sich bei den Vorsprüngen (20) um zylinderförmige Nippel handelt.

6. Wabenstruktur (1) nach einem der vorhergehenden Ansprüche, wobei mindestens ein Befestigungselement (25) an zumindest einem seiner Enden geschlitzt ist.

7. Wabenstruktur (1) nach einem der vorhergehenden Ansprüche, wobei das Befestigungselement (25) eine Buchse ist.

8. Wabenstruktur (1) nach einem der vorhergehenden Ansprüche, wobei das Befestigungselement (25) aus Invar® besteht.

9. Wabenstruktur (1) nach einem der Ansprüche 1 bis 7, wobei das Befestigungselement (25) aus einem Keramikwerkstoff hergestellt ist, der ausgewählt wird aus Siliziumnitrid und Zerodur®-Glaskeramik.

10. Spiegel, der eine Wabenstruktur (1) nach einem der vorhergehenden Ansprüche umfasst, **dadurch gekennzeichnet, dass** der reflektierende Teil durch die oder auf der Membran der Wabenstruktur (1) gebildet wird.

## Claims

1. A honeycomb structure (1) comprising a so-called front part (21) and a so-called rear part (22) such that:
the so-called front part (21) and the so-called rear part (22) are honeycomb structures formed by a skin (23) and by stiffeners (10), the whole thing forming a monoblock structure, said stiffeners (10) being formed by intermeshing blades orientated substantially perpendicularly to said skin (23),
the structure being **characterised in that**:
the so-called front part (21) and the so-called rear part (22) comprise protuberances (20) on the stiffeners (10) on the face opposite to the skin (23), said protuberances (10) being disposed on said so-called front part (21) and on said so-called rear part (22) such that each protuberance (20) of the so-called front part (21) is located opposite a protuberance (20) of the so-called rear part (22) when the two parts are assembled, and **in that**
the so-called front part (21) and the so-called rear part (22) are assembled by means of an attachment device (25) into which two opposing protuberances (20) are inserted.

2. The honeycomb structure (1) according to the preceding claim, according to which at least one protuberance (20) is disposed at the intersection of at least two stiffeners (10).

3. The honeycomb structure (1) according to either of the preceding claims, according to which at least one protuberance (20) is bonded to the attachment device (25).

4. The honeycomb structure (1) according to the preceding claim, according to which the adhesive joint (24) is only distributed over part of the periphery of the protuberances (20).

5. The honeycomb structure (1) according to any of the preceding claims, according to which the protuberances (20) are cylindrical stubs.

6. The honeycomb structure (1) according to any of the preceding claims, according to which at least one attachment device (25) is slotted at one of its ends at least.

7. The honeycomb structure (1) according to any of the preceding claims, according to which the attachment device (25) is a socket.

8. The honeycomb structure (1) according to any of the preceding claims, according to which the attachment device (25) is made of Invar®.

9. The honeycomb structure (1) according to any of Claims 1 to 7, according to which the attachment device (25) is made with a ceramic material chosen from silicon nitride and vitro-ceramic glass of the Zerodur® type.

10. A mirror comprising a honeycomb structure (1) according to any of the preceding claims, **characterised in that** the reflecting part is formed by or on the skin of said honeycomb structure (1).
